(19) Europäisches Patentamt
European Patent Office
Office européen des brevets

(11) **EP 4 044 145 A1**

(12) **EUROPEAN PATENT APPLICATION**

(43) Date of publication:
**17.08.2022 Bulletin 2022/33**

(21) Application number: **21382101.0**

(22) Date of filing: **10.02.2021**

(51) International Patent Classification (IPC):
*G08G 1/0968* (2006.01)    *G01C 21/34* (2006.01)
*G08G 1/127* (2006.01)     *G08G 1/00* (2006.01)
*B60L 58/10* (2019.01)     *G06Q 10/06* (2012.01)
*B60L 58/40* (2019.01)     *B60L 15/20* (2006.01)
*B60W 20/12* (2016.01)     *B60W 20/13* (2016.01)

(52) Cooperative Patent Classification (CPC):
**G08G 1/202; B60L 15/2045; B60L 58/10;
B60L 58/40; B60W 20/12; B60W 20/13;
G01C 21/3469; G06Q 10/047; G06Q 10/06315;
G08G 1/096811; G08G 1/096844; G08G 1/127**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ikerlan, S. Coop.
20500 Mondragon (ES)**

(72) Inventors:
• **LOPEZ IBARRA, Jon Ander
20500 Arrasate - Mondragon (ES)**
• **GAZTAÑAGA ARANZAMENDI, Haizea
20500 Arrasate - Mondragon (ES)**

(74) Representative: **Igartua, Ismael
Galbaian S. Coop.
Garaia Parke Teknologikoa
Goiru Kalea 1
20500 Arrasate-Mondragón (ES)**

(54) **VEHICLE FLEET MANAGEMENT METHOD**

(57)    The invention relates to a fleet management method with comprising a plurality of electric vehicles (1) with at least one battery (1.0) and an assigned route for each vehicle (1). For each vehicle (1), the method comprises a monitoring step (S2) in which different operating variables of the vehicle (1) are monitored while it performs its route; and an analysis step (S3.2) in which the state of health of the battery is estimated depending on said variables. At the fleet level, the method further comprises a decision making step (S4) in which a reorganization of routes is performed among the vehicles (1) depending on a reference value, said reference value being the median of the estimated states of health of all the batteries.

Fig. 1

## Description

TECHNICAL FIELD

The present invention relates to vehicle fleet management methods, and more specifically to vehicle fleets comprising hybrid vehicles and pure electric vehicles.

PRIOR ART

Growing concern with respect to the topic of the greenhouse gas emissions has led to a change in mentality in the automotive industry to find more sustainable products and ecological solutions. For this reason, it is increasingly more common to see hybrid and electric vehicles on the market.

In the case of the vehicle fleets, such as bus fleets, the trend is to replace combustion vehicles with other more sustainable and ecological vehicles, such as hybrid vehicles and pure electric vehicles. The use of vehicles of this type offers new fleet control options. Vehicles of this type use batteries for driving them, and these batteries present a given state of health and degradation, so the efficiency and efficacy of the vehicles and, therefore, of the fleet can be improved by managing and/or controlling the use of said batteries.

The paper "Plug-in hybrid electric buses total cost of ownership optimization at fleet level based on battery aging", Jon Ander Lopez-Ibarra et al., 30 September 2020, discloses a management method for fleets comprising hybrid vehicles to optimize total cost of ownership of the fleet based on energy management of the batteries of the vehicles forming the fleet.

DISCLOSURE OF THE INVENTION

The object of the invention is to provide a method of managing a vehicle fleet comprising a plurality of electric vehicles and a route assigned to each vehicle, as defined in the claims.

Each vehicle comprises at least one battery, with all the batteries forming a battery pack. For each vehicle of the fleet, the method comprises a monitoring step in which different parameters or operating variables of the vehicle are monitored while it performs its assigned route, among which variables are at least the state of charge of the battery and the current consumption of said battery; and an analysis step in which the state of health of the corresponding battery is estimated depending on the data monitored in the corresponding monitoring step.

At the fleet level, the method further comprises a decision making step in which it is determined which batteries comprise a state of health above and below a state of health reference value, said reference value being the median of the estimated states of health of all the batteries. A reorganization of routes is carried out in the decision making step if at least one of the following conditions is fulfilled:

- If it is detected that at least the state of health of one of the batteries is equal to or less than a predetermined value below the reference value. In this case the route previously assigned to said vehicle is exchanged with the route previously assigned to a vehicle the battery of which comprises an estimated state of life greater than the reference value.

- If it is detected that at least the state of health of one of the batteries is equal to or greater than a maximum predetermined value above the reference value. In this case the route previously assigned to said vehicle is exchanged with the route previously assigned to a vehicle the battery of which comprises an estimated state of life less than the reference value.

A strategy is thereby established at the fleet level to improve route efficiency, furthermore considering the state of each of the vehicles, since as a result of the proposed route exchange each of the batteries included in the fleet can be optimized to a greater extent. The method provides control over the batteries of the fleet, and as a result of said control, the vehicles of the fleet are efficiently reorganized for the purpose of improving and controlling with greater efficiency the use of the batteries. The calculated state of health reference value, which represents a mean estimate of the service lives of the batteries, is used as a reference so with said reorganization of routes, all the batteries ultimately have substantially the same service life, which balances out fleet resources and makes the management thereof easier.

These and other advantages and features of the invention will become apparent in view of the figures and detailed description of the invention.

DESCRIPTION OF THE DRAWINGS

Figure 1 schematically shows an embodiment of the management method according to the invention.

Figure 2 depicts a hybrid vehicle used in a fleet, with the corresponding steps according to the method of Figure 1 integrated therein.

Figure 3 schematically shows the communication between a fleet control device and local control devices of three vehicles of a fleet configured for integrating the method according to Figure 1.

Figure 4 depicts a characterization of a hybrid vehicle of the fleet.

DETAILED DISCLOSURE OF THE INVENTION

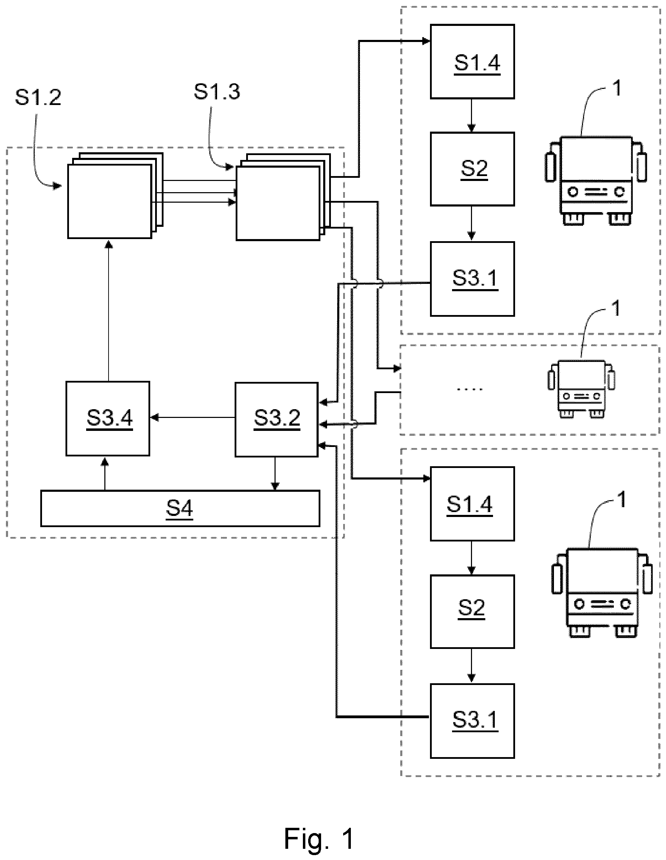

Figure 1 schematically depicts an embodiment of the management method of the invention, which is suitable for a vehicle fleet, preferably autobuses, comprising a plurality of electric vehicles 1, each vehicle 1 comprising at least one battery 1.0, and all the batteries 1.0 forming a battery pack. The vehicles 1 can be pure electric vehicles, hybrid vehicles, or some can be pure electric vehicles and others hybrid vehicles. The fleet has to cover a plurality of routes, such that each route is assigned to a vehicle 1, each vehicle 1 thus having an assigned route. The fleet is furthermore previously determined to have a given service life.

Each hybrid vehicle that may be included in the fleet comprises a first power supply 1.1 (an electric motor, for example) and a second power supply 1.2 (a combustion engine or a fuel cell, for example), by means of which the electrical power required for the hybrid vehicle is supplied, and each pure electric vehicle that may be included in the fleet comprises at least one battery 1.0 to provide the required power. The required power includes both the power needed to move the vehicle 1 and the power needed to act on the auxiliaries of said vehicle 1. The auxiliaries of a vehicle 1 are elements such as lights, air conditioning, or any other element that requires electrical energy and is not part of the elements generating the movement of said vehicle 1.

The first power supply 1.1 of a hybrid vehicle generates power from electrical energy stored in at least one battery 1.0 of the hybrid vehicle, and the second power supply 1.2 of said hybrid vehicle generates power from fuels such as diesel, gasoline, or hydrogen, for example. The hybrid vehicle is configured for operating with only the first power supply 1.1, with only the second power supply 1.2, or with both power supplies 1.1 and 1.2 simultaneously, depending on a division factor determining which percentage of power supplied to a hybrid vehicle comes from the first power supply 1.1 and which percentage comes from the second power supply 1.2.

The batteries 1.0 of all the vehicles 1 of the fleet are preferably rechargeable through a plug, the vehicles 1 of the fleet thus being plug-in vehicles.

For each vehicle 1 of the fleet, the method comprises a monitoring step S2 in which different parameters or operating variables of the vehicle 1 are monitored while it performs its assigned route, among which variables are at least the state of charge of the battery 1.0 (SOC) and the current consumption of said battery 1.0; and an analysis step S3.2 in which the state of health of the corresponding battery 1.0 (SOH) is estimated based on the data monitored in the corresponding monitoring step S2. The information about all the batteries 1.0 of the fleet can thereby be available. The state of health of the batteries 1.0 from at least this data can be calculated with conventional methods already known for that purpose, for example based on a Rainflow cycle counting algorithm and on the Wöhler fatigue curve method.

At the fleet level, the method further comprises a decision making step S4 in which a reorganization of routes is performed assigning each vehicle 1 to one of the routes to be covered by the fleet depending on a state of health reference value of the batteries 1.0, said reference value being the median of the estimated states of health of all the batteries 1.0 (said estimation is performed in the different analysis steps S3.2). In said decision making step S4, it is furthermore determined which batteries 1.0 comprise a state of health above and below the reference value, and a reorganization of routes is carried out if it is detected that at least the state of health of one of the batteries 1.0 is equal to or less than a minimum predetermined value below the reference value, the route previously assigned to said vehicle 1 being exchanged with the route previously assigned to a vehicle 1 the battery 1.0 of which comprises an estimated state of life greater than the reference value; and/or if it is detected that at least the state of health of one of the batteries 1.0 is equal to or greater than a maximum predetermined value above the reference value, the route previously assigned to said vehicle 1 being exchanged with the route previously assigned to a vehicle 1 the battery 1.0 of which comprises an estimated state of life less than the reference value. The execution of the decision making step S4 therefore does not necessarily imply the change in route for at least one vehicle 1, it could imply maintaining all the assigned routes at that time, or the change in routes for only some of the vehicles 1 of the fleet.

The calculation of the median of the state of health is preferably, though not necessarily, performed in the decision making step S4.

The minimum predetermined value below the reference value is between 15% and 25% less than said reference value, preferably 20%, and the maximum predetermined value above the reference value is between 15% and 25% greater than said reference value, preferably 20%, a sufficient margin being ensured to enable covering more demanding routes without this implying a reduction in mean service life.

The decision making step S4 is preferably executed at least when it is detected, based on the estimated states of health of the batteries 1.0, that the state of health of at least one of said batteries 1.0 reaches half of a service life established for the batteries 1.0 (when it is detected for the first time that the state of health of one of said batteries 1.0 reaches said value). Generally, the service life of a battery 1.0 is estimated until that the state of health of said battery 1.0 reaches 80%, after which time degradation thereof is very rapid. Therefore, half of the service life of a battery 1.0 preferably occurs when the state of health of said battery 1.0 reaches 90%, and the decision making step S4 is thereby preferably executed when it is detected that the state of health of a battery reaches 90%. This usually occurs first in the battery 1.0 associated with the most demanding route. It is known that after said value reaches 80%, the battery 1.0 degrades very rapidly, so by setting this evaluation point the drop in said state of health is detected enough in advance to enable reacting and acting, reassigning it to a new route if that were the case, for example. This results in a more efficient use of the batteries 1.0 of the fleet, which delays their substitution (cases where the service life is less than the service life required for the fleet).

This reorganization is maintained until the life plan of the batteries 1.0 is fulfilled, i.e., until the batteries 1.0 reach their service life. If the service life of the batteries 1.0 of a battery pack coincides with the service life of the fleet, nothing else is required to be done, but if the service life of said batteries 1.0 is less than the service life of the fleet, then replacing said batteries 1.0 with new ones is required, i.e., one battery pack is replaced with another battery pack. In this latter case, the decision making step S4 will be executed again under the same criteria described above. Therefore, in the proposed method a decision making step S4 is preferably executed with each battery pack used.

The method is furthermore configured for determining how each hybrid vehicle of the fleet operates in order to achieve the highest energy efficiency in each hybrid vehicle in terms of the ratio between fuel consumption and use of the corresponding battery 1.0, fleet energy management being optimized. To that end the method comprises additional steps at least at the vehicle level (steps which are implemented in each hybrid vehicle taking into account criteria associated with the hybrid vehicle 1 itself).

For a fleet with hybrid vehicles and for each hybrid vehicle of the fleet (which are implemented in each of the hybrid vehicles), the method further comprises at least one optimization step S1.2, a learning step S1.3, and an implementation step S1.4.

In the optimization step S1.2, on the basis of the characterization of the corresponding hybrid vehicle (furthermore considering its dynamic equations and the characteristics of the battery 1.0) and a predetermined velocity curve for said hybrid vehicle along its assigned route, a power demand curve for said hybrid vehicle along said route assigned and a state of charge curve of the battery 1.0 of said hybrid vehicle during said route assigned (for said power demand curve) are estimated with an optimization technique. The velocity curve can be obtained based on prior experiences when covering said route, for example. The state of charge of the battery 1.0 is estimated preferably taking into account a predetermined initial charge value at the start of the assigned route (a maximum charge, which can be 90% or 100% of its nominal charge, for example), and an end value of charge predetermined at the end of the route assigned (a minimum charge between 30% and 50% of its nominal charge, for example). The optimization technique used is preferably the technique known as dynamic programming.

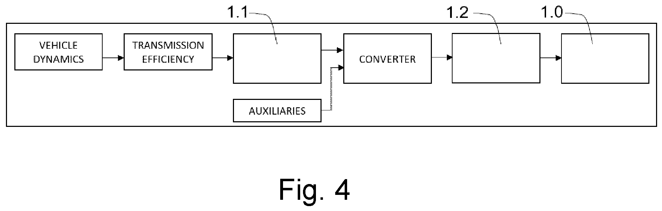

Figure 4 depicts a characterization of a hybrid vehicle, which includes, among others, the dynamics of said hybrid vehicle. The dynamics of a vehicle 1 include variables and parameters such as aerodynamic force $F_a$, gravitational force $F_g$, inertia force $F_i$, friction force $F_r$, and the mass m of the vehicle itself. The velocity of each wheel of the vehicle, the angular acceleration, and the required torque, which is what must be provided with the power supplies 1.1 and 1.2 together with what is needed for the auxiliaries (the power demand), are obtained from these variables and equations. The velocity of each wheel of the vehicle 1, the angular acceleration, and the required torque are obtained with the ratio shown in the following equations:

$$F_T = F_a + F_g + F_i + F_r,$$

wherein $F_T$ is total force.

$$F_a = 0.5 * p * A * cx * v^2;$$

$$F_g = m * g * \sin\alpha;$$

$$F_i = m * a;$$

$$F_r = crf * m * g * \cos\alpha;$$

$$w_{wh} = v_{cyc}/r_{wh};$$

$$dW_{wh} = a_{cyc}/r_{wh};$$

$$T_{wh} = F_T * r_{wh}.$$

wherein:

- $F_T$ is total force;
- p is air density;
- A is the front area of the vehicle 1;
- cx is aerodynamic drag;
- g is gravitational acceleration;
- crf is the friction coefficient;
- $\alpha$ is the slope of the route;
- $w_{wh}$ is rotational velocity of the wheel;
- $dW_{wh}$ is angular acceleration;
- $T_{wh}$ is the required torque;
- $V_{cyc}$ is velocity;
- $a_{cyc}$ is acceleration; and
- $r_{wh}$ is the radius of the wheel.

The transmission of a vehicle 1 consists of the elements arranged between the electric motor and the axle of the corresponding wheels, and part of the generated power is lost through said transmission. It is therefore also necessary to include the efficiency of this transmission when evaluating the power demand, since these losses must be added to the power the wheels require to reach the power to be supplied (demanded power). The calculation of the efficiency of a transmission is known and not described.

In the learning step S1.3 of each hybrid vehicle, a learning technique, preferably a technique based on neural networks such as the technique known as neuro-fuzzy technique, having a plurality of levels, preferably five, is applied. On the basis of variables as inputs and a given output, this learning technique establishes a learning strategy (interconnection pattern) which allows said output to be obtained with said inputs. To establish the learning strategy, said technique is based on "training", i.e., a set of inputs and a single output are not enough, rather it uses different values for said set of inputs with different output results, such that a learning strategy that is valid for all these iterations is established.

In this case, in the learning step S1.3 three variables are used as inputs for the learning technique used: the power demand curve of the hybrid vehicle along its assigned route and estimated in the corresponding optimization step S1.2, the state of charge curve of the battery 1.0 of said hybrid vehicle estimated in the corresponding optimization step S1.2, and a curve of the ratio of its assigned route. The assigned route is considered in terms of the distance remaining to complete said route (ratio of the remaining distance, preferably as a percentage). A predetermined power curve to be supplied by the second power supply 1.2 along said assigned route is used as the output of said learning technique. The second power supply 1.2 is the power supply of the hybrid vehicle not using the electrical energy stored in the battery 1.0 of said hybrid vehicle, such that with said learning technique the use of said second power supply 1.2 and the use of the battery 1.0 are linked to one another (through their state of charge curve), a learning strategy linking the use of both power supplies 1.1 and 1.2 being obtained, which allows a more efficient use to be established. In the learning technique used, the methodology known as backpropagation is preferably applied to obtain the interconnection pattern. This methodology involves starting from the back, i.e., starting from the end state of the input and output curves to be considered.

In summary, in the learning step S1.3 an interconnection pattern, or learning strategy, is obtained which, on the basis of input variables, makes the use of the power supplies 1.1 and 1.2 more efficient (based on the use of the second power supply 1.2) considering said inputs. As described, said inputs take into account the state of charge of the battery 1.0 as well as the route the hybrid vehicle has to travel and the power it has to supply, so the more efficient use of the power supplies 1.1 and 1.2 also considers, for each case in particular, an efficient use of the battery 1.0 associated with the task the hybrid vehicle has to perform.

In the implementation step S1.4 of each hybrid vehicle, at least the real power demand (the power the hybrid vehicle needs), the real state of charge of the battery 1.0 of said hybrid vehicle, and the remaining distance ratio of its assigned route are monitored, and from this data the real power to be supplied by the second power supply 1.2 is calculated. It therefore starts from the same input variables as those that were used in the learning technique of the learning step S1.3, with the difference that in this case these variables are a reflection of the real state of the hybrid vehicle, and the same output variable as from said learning technique is obtained, with the difference that in this case the real power to be supplied which is obtained as output is the real power to be applied. In the implementation step S1.4, since learning is no longer required as the required learning has already been performed in the prior in the learning step S1.3, a technique is used with the learning strategy obtained in the corresponding learning step S1.3 (preferably the technique known as fuzzy logic technique). Therefore, from the real input variables, after applying said learning strategy the real electrical power to be supplied by means of the second power supply 1.2 is obtained. From said calculated real power and from the detected power demand (the latter is used as an input variant), in said implementation step S1.4 the power to be supplied by the first power supply 1.1 is calculated to enable supplying the entire power demand required for the hybrid vehicle between both power supplies 1.1 and 1.2, and finally, in said implementation step S1.4 said power supplies 1.1 and 1.2 are acted on so that each of said power supplies 1.1 and 1.2 supplies the respective calculated power. Basically, the electrical power to be supplied by the first power supply 1.1 is the result of subtracting the detected power demand from the obtained real power to be supplied by the second power supply 1.2.

A strategy is thereby established which takes into account an efficient use of the battery 1.0 of each hybrid vehicle, depending on the conditions and characteristics of the hybrid vehicle itself (by means of the power to be supplied by each power supply 1.1 and 1.2), and optimal control over the use of the batteries 1.0 which allows more effectively controlling the service life of said batteries 1.0 is obtained.

The proposed method is thus configured for considering the hybrid vehicles of the fleet individually and the entire fleet as a whole, so a fleet management which improves its efficiency and furthermore improves the total operation cost of said fleet is obtained because in addition to the service life of the batteries 1.0, it takes into account the compromise between the fuel consumption required by hybrid vehicles and said batteries 1.0.

From the new assignment of routes and the new powers to be supplied by each of the power supplies 1.1 and 1.2 of the hybrid vehicles 1 (adjustment step S3.4), the following optimization step S1.2 of each hybrid vehicle uses the velocity curve associated with its assigned route (new curve if it is a new route or the same curve from before if it maintains its assigned route) and the power demand curve derived from the new calculated powers to be supplied in said adjustment step S3.4.

Optimal balance between fuel consumption (power generation through the power supplies 1.2) and the use of the batteries 1.0 (due to the generation of power through the power supplies 1.1) of hybrid vehicles 1, i.e., an optimal balance between fuel consumption and the life of the batteries 1.0, can thus be achieved, which helps to improve total operation cost of the fleet. Therefore, with the proposed method the fleet operator maximizes profits, taking into account not only fuel consumption but also the life of the batteries 1.0 integrated in the vehicles 1 of the fleet, since the use of the batteries 1.0 is optimized at the fleet level.

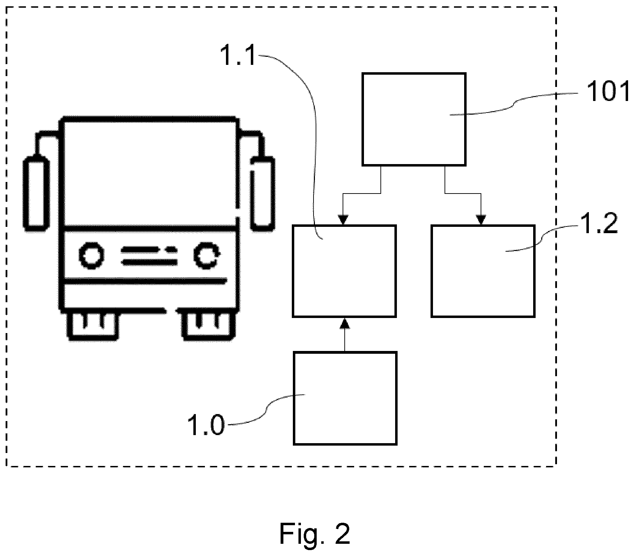

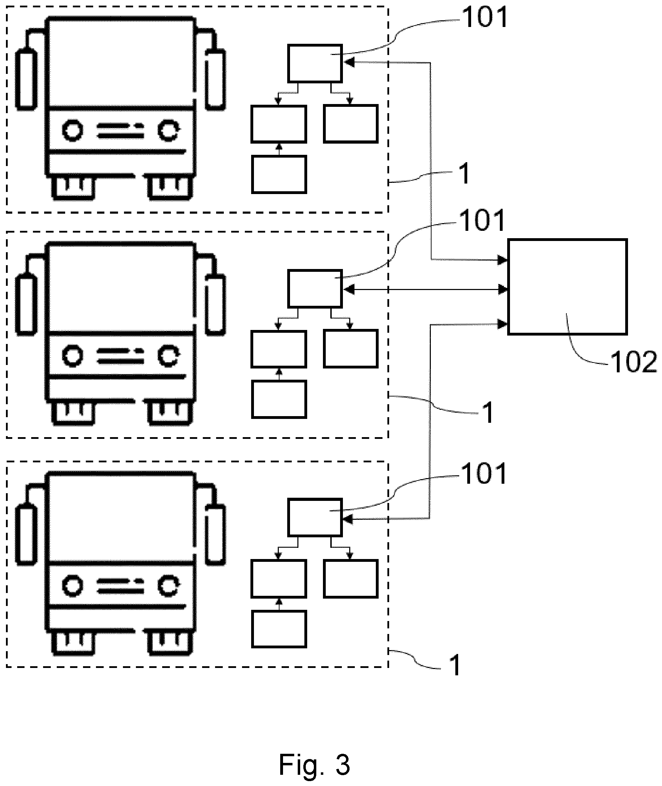

Each vehicle 1 comprises a local control device 101, depicted in Figures 2 and 3, where the corresponding steps are implemented (depending on whether they are hybrid vehicles or pure electric vehicles), and these local control devices 101 are thus in charge of controlling the actuation of the respective power supplies 1.1 and 1.2 in the case of hybrid vehicles, thus being communicated with said power supplies 1.1 and 1.2. The steps that are executed at the local level, i.e., in the local control device 101, are executed dynamically and in real time (every second for example), which allows updating the action on the power supplies 1.1 and 1.2 at all times along the route of the corresponding hybrid vehicle, in the case of hybrid vehicles, according to a the conditions at the moment of said hybrid vehicles 1, and allows having control over the state of health of all the batteries 1.0 at all times.

The fleet comprises a fleet control device 102 outside of said vehicles 1, integrated in the cloud for example, and the optimization step S1.2, the adjustment step S3.4, the decision making step S4 and the learning step S1.3 are implemented in said fleet control device 102. Said fleet control device 102 is communicated with the local control devices 101 of all the vehicles 1, as depicted in Figure 3, such that an exchange of information or data between said fleet control device 102 and said local control devices 101 when required is enabled. The steps of the method implemented in the fleet control device 102 are executed "statically", i.e., these steps are executed only when required or when a pre-established condition is met (as in the case of the decision making step S4 described above). It can thus be periodically implemented with predetermined time periods (every month or every year, for example), or it can be caused to be activated at times when it is required, in a controlled manner.

Implementing the steps of the local control devices 101 allows the operating conditions of the vehicle 1 to be adjusted in real time, depending on real current measurements of operating variables of said vehicle 1. However, given that the general conditions of the routes and hybrid vehicles do not constantly change, it is not necessary to implement the steps that are implemented in the fleet control device 102 in real time, and they can be used when required. For example, they can be implemented with the change in seasons, where weather conditions vary and, therefore, the conditions hybrid vehicles 1 will have to confront vary; or they can be implemented yearly in order to perform a periodic analysis of the fleet and detect any possible anomaly or possible reassignment.

## Claims

1. Method of managing a vehicle fleet comprising a plurality of electric vehicles (1) and a route assigned to each vehicle (1), each vehicle (1) comprising at least one battery (1.0) and all the batteries (1.0) of the vehicles (1) in the fleet forming a battery pack, **characterized in that** for each vehicle (1) of the fleet, the method comprises

    a monitoring step (S2) in which different operating variables of the vehicle (1) are monitored while it performs its assigned route, among which variables are at least the state of charge of the battery (1.0) and the current consumption of said battery (1.0); and
    an analysis step (S3.2) in which the state of health of the corresponding battery (1.0) is estimated depending on the variables monitored in the corresponding monitoring step (S2), and at the fleet level, the method comprising a decision making step (S4) in which a reorganization of routes is performed assigning each vehicle (1) to one of the routes to be covered by the fleet depending on a state of health reference value of the batteries (1.0), said reference value being the median of the estimated states of health of all the batteries (1.0), determining in said decision making step (S4) which batteries (1.0) comprise a state of health above and below the reference value, and a reorganization of routes being carried out
    if it is detected that at least the state of health of one of the batteries (1.0) is equal to or less than a minimum predetermined value below the reference value, the route previously assigned to said vehicle (1) being exchanged with the route previously assigned to a vehicle (1) the battery (1.0) of which comprises an estimated state of life greater than the reference value; and/or
    if it is detected that at least the state of health of one of the batteries (1.0) is equal to or greater than a maximum predetermined value above the reference value, the route previously assigned to said vehicle (1) being exchanged with the route previously assigned to a vehicle (1) the battery (1.0) of which comprises an estimated state of life less than the reference value.

2. Method according to claim 1, wherein the minimum predetermined value below the reference value is between 15% and 25% less than said reference value, preferably 20%, and wherein the maximum predetermined value above the reference value is between 15% and 25% greater than said reference value, preferably 20%.

3. Method according to claim 1 or 2, wherein the decision making step (S4) is executed at least when it is detected, based on the estimated states of health of the batteries (1.0), that the state of health of at least one of said batteries (1.0) reaches half of its service life, said service life being a minimum predetermined value for the state of health.

4. Method according to claim 3, wherein the predetermined value for the state of health of a battery (1.0), associated with the predetermined service life for said battery (1.0), is 80% of said state of health.

5. Method according to claim 3 or 4, wherein a single decision making step (S4) is applied for each battery pack.

6. Method according to claim 3 or 4, wherein when the service life of the batteries (1.0) of a battery pack is fulfilled and said service life of the batteries (1.0) is less than a service life of the fleet, said battery pack is replaced with another battery pack.

7. Method according to any of claims 1 to 6, wherein the fleet further comprises a plurality of hybrid vehicles, each hybrid vehicle comprising a first power supply (1.1) from electrical energy stored in at least one battery (1.0) and a second power supply (1.2) from a fuel, preferably diesel, gasoline, or hydrogen, for each hybrid vehicle of the fleet, the method comprising an optimization step (S1.2) in which on the basis of the characterization of the corresponding hybrid vehicle and of a predetermined velocity curve for the route assigned to said hybrid vehicle, a power demand curve for said hybrid vehicle along said route and a state of charge curve of the battery (1.0) of said hybrid vehicle during said route for said power demand curve are estimated; a learning step (S1.3) in which a learning strategy or interconnection pattern relating input variables with an output variable is obtained, the estimated power demand and state of charge curves and a ratio of the remaining distance to be completed of the assigned route being the input variables and a given predetermined power curve to be supplied by the second power supply (1.2) being the output variable; and an implementation step (S1.4) in which the real power demand, the real state of charge of the battery, and the remaining distance ratio of the route of the corresponding hybrid vehicle are monitored; the power to be supplied by the second power supply (1.2) of said hybrid vehicle being calculated using said real power demand, said real state of charge and said ratio of the assigned route to be completed as input variables for the learning strategy obtained in the corresponding learning step (S1.3), said power to be supplied by the second power supply (1.2) being obtained as a result or output variable; the power to be supplied by the first power supply (1.1) being calculated as a result of subtracting said monitored power demand from said power calculated as output of the fuzzy logic technique; and the first power supply (1.1) and the second power supply (1.2) of the corresponding hybrid vehicle being acted on depending on said calculated respective powers, the method further comprising, at the fleet level, an adjustment step (S3.4) in which, depending on the assignment of routes performed in the decision making step (S4), the value of the power to be supplied by each of the power supplies (1.1, 1.2) of the hybrid vehicles is determined, using the velocity curve associated with its assigned route and the power curve derived from the new calculated powers to be supplied for the following optimization step (S1.2) of each hybrid vehicle.

8. Method according to claim 7, wherein the learning technique used in each learning step (S1.3) to obtain the given learning strategy is based on neural networks.

9. Method according to claim 8, wherein the learning technique used in each learning step (S1.3) to obtain the given learning strategy is the neuro-fuzzy technique.

10. Method according to claim 9, wherein the neuro-fuzzy technique used in the learning step (S1.3) is used with the backpropagation methodology.

11. Method according to claim 9 or 10, wherein the neuro-fuzzy technique used in the learning step (S1.3) comprises five levels.

12. Method according to any of claims 7 to 11, wherein in the implementation step (S1.4), the learning strategy obtained in the learning step (S1.3) is applied in a fuzzy logic structure.

13. Method according to any of claims 7 to 12, wherein in the optimization step (S1.2), the optimization technique known as dynamic programming is used.

14. Method according to any of claims 1 to 13, wherein each vehicle (1) comprises a local control device (101) where the steps at the vehicle level of the corresponding method are implemented, the fleet comprising a fleet control device (102) outside of said vehicles (1) and communicated with the local control devices (101) of all the vehicles (1), the steps at the fleet level of the corresponding method being implemented in said fleet control device (102).

15. Method according to claim 14, wherein the steps that are implemented in the local control devices (101) are executed dynamically, and wherein the steps that are executed in the fleet control device (102) are executed when required.

Fig. 1

Fig. 2

Fig. 3

1.1                1.2      1.0

| VEHICLE DYNAMICS | → | TRANSMISSION EFFICIENCY | → | | → | CONVERTER | → | | → | |

AUXILIARIES

## Fig. 4

**Europäisches Patentamt**
**European Patent Office**
**Office européen des brevets**

# EUROPEAN SEARCH REPORT

Application Number

EP 21 38 2101

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/239365 A1 (HYDE RODERICK A [US] ET AL) 27 August 2015 (2015-08-27) | 1-6,14, 15 | INV.<br>G08G1/0968 |
| Y | * paragraphs [0011], [0015], [0019], [0090], [0113], [0127], [0176], [0226]; figure 26 * | 7-13 | G01C21/34<br>G08G1/127<br>G08G1/00<br>B60L58/10 |
| A | EP 3 492 873 A1 (EINRIDE AB [SE]) 5 June 2019 (2019-06-05) * paragraphs [0001], [0011] - [0013], [0023], [0030] - [0041] * * paragraph [0023] * | 1-15 | G06Q10/06<br>B60L58/40<br>B60L15/20<br>B60W20/12<br>B60W20/13 |
| Y | US 2014/018985 A1 (GUPTA RAKESH [US] ET AL) 16 January 2014 (2014-01-16) * paragraphs [0003], [0021] - [0027], [0040] - [0065]; figures 1-5 * | 7-13 | |

TECHNICAL FIELDS
SEARCHED (IPC)

G08G
G01C
B60L
G06Q
B60W

The present search report has been drawn up for all claims

| Place of search | Date of completion of the search | Examiner |
|---|---|---|
| The Hague | 1 July 2021 | Fagundes-Peters, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 38 2101

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2021

| Patent document cited in search report | | Publication date | Patent family member(s) | | Publication date |
|---|---|---|---|---|---|
| US 2015239365 | A1 | 27-08-2015 | US 2015239365 A1<br>US 2018134171 A1 | | 27-08-2015<br>17-05-2018 |
| EP 3492873 | A1 | 05-06-2019 | CN 111279155 A<br>EP 3492873 A1<br>ES 2837001 T3<br>TW 201926236 A<br>US 2020393260 A1<br>WO 2019105917 A1 | | 12-06-2020<br>05-06-2019<br>29-06-2021<br>01-07-2019<br>17-12-2020<br>06-06-2019 |
| US 2014018985 | A1 | 16-01-2014 | JP 2014019433 A<br>US 2014018985 A1 | | 03-02-2014<br>16-01-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JON ANDER LOPEZ-IBARRA et al.** *Plug-in hybrid electric buses total cost of ownership optimization at fleet level based on battery aging,* 30 September 2020